# EUROPÄISCHE PATENTSCHRIFT

(11) **EP 1 526 474 B1**
(45) Veröffentlichungstag und Bekanntmachung des Hinweises auf die Patenterteilung: **10.12.2008**
(21) Anmeldenummer: 04024805.6
(22) Anmeldetag: 19.10.2004
(51) Int. Cl.: G06K 7/00

(54) **Verfahren zur Auswahl eines oder mehrerer Transponder**
Method for selecting one or more transponders
Procédé pour sélectionner un ou plusieurs transpondeurs

(30) Priorität: 21.10.2003 DE 10349647
(43) Veröffentlichungstag der Anmeldung: 27.04.2005
(73) Patentinhaber: ATMEL Germany GmbH, 74072 Heilbronn (DE)
(72) Erfinder: Friedrich, Ulrich, Dipl.-Ing., 74248 Ellhofen (DE)

(56) Entgegenhaltungen:
- EP-A2- 0 709 803
- EP-A2- 0 929 048
- EP-A2- 1 211 630
- EP-A2- 1 321 889
- US-A1- 2003 179 078
- US-B1- 6 538 563

## Beschreibung

Die Erfindung bezieht sich auf ein Verfahren zur Auswahl eines oder mehrerer Transponder aus einer Vielzahl von Transpondern durch eine Basisstation gemäß dem Oberbegriff des Anspruchs 1.

Derartige Auswahlverfahren, die auch als Antikollisionsverfahren bezeichnet werden, finden beispielsweise bei kontaktlosen Identifikationssystemen oder sogenannten Radio-Frequency-Identification(RFID)-Systemen Verwendung. Ein derartiges System besteht üblicherweise aus einer Basisstation bzw. einem Lesegerät und einer Vielzahl von Transpondern oder Remote-Sensoren, die sich gleichzeitig im Ansprechbereich der Basisstation befinden. Wenn die Datenübertragung nur zwischen einem bzw. einer Gruppe von Transpondern und der Basisstation erfolgen soll, muss vor der entsprechenden Datenübertragung ein solches Auswahlverfahren durchgeführt werden.

Grundsätzlich wird hierbei zwischen stochastischen und deterministischen Auswahlverfahren unterschieden. Eine ausführliche Beschreibung sowohl zu deterministischen Auswahlverfahren als auch zu stochastischen Auswahlverfahren findet sich beispielsweise in dem Lehrbuch Klaus Finkenzeller, RFID-Handbuch, 3. Aufl., HANSER, 2002, siehe insbesondere Kapitel 7.2 Vielfachzugriffsverfahren.

Stochastische Verfahren setzen im Gegensatz zu deterministischen Verfahren keine eindeutige, sogenannte Unique-Identification(U-ID) voraus, deren Aufbau beispielsweise in der Norm ISO 15963 beschrieben ist. Eine Vergabe derartiger U-IDs wird unter anderem von verschiedenen herstellerunabhängigen Organisationen vorgenommen, beispielsweise der EAN/UCC oder der IATA. Die Vergabe kann jedoch auch von einem Hersteller selbst vorgenommen werden. Insgesamt kann folglich in offenen Systemen, bei denen sich Transponder beliebiger Hersteller im Ansprechbereich einer Basisstation befinden können, die Eindeutigkeit der U-ID nicht immer sichergestellt werden. Stochastische Verfahren ermöglichen eine Auswahl auch in diesen Fällen. Beispiele für derartige stochastische Verfahren sind das sogenannte ALOHA-Verfahren, das slotbasierte bzw. slotted ALOHA-Verfahren sowie das dynamische slotbasierte ALOHA-Verfahren.

Das ALOHA-Verfahren ist ein transpondergesteuertes, stochastisches Verfahren, bei dem die Transponder zeitversetzt ihre zu übertragenden Daten senden. Der Zeitversatz wird in der Regel auf Basis einer im Transponder erzeugten Zufallszahl eingestellt. Wenn mehrere Transponder eine Kennung innerhalb des gleichen Zeitschlitzes senden, tritt eine sogenannte Kollision auf. Dies verhindert üblicherweise, dass die Basisstation die gesendeten Daten fehlerfrei empfangen kann.

Beim slotbasierten ALOHA-Verfahren ist die Kollisionswahrscheinlichkeit im Vergleich zum einfachen ALOHA-Verfahren deutlich reduziert. Es ist ein von der Basisstation gesteuertes, stochastisches Verfahren, bei dem die Transponder nur zu definierten, synchronen Zeitpunkten aktiv sind, d.h. mit der Übertragung von Daten beginnen. Hierzu gibt die Basisstation nummerierte Zeitschlitze bzw. Slots vor und die Transponder erzeugen jeweils eine Zufallszahl, wobei jeder Transponder, dessen Zufallszahl der Nummer eines Zeitschlitzes entspricht, Daten bzw. eine Kennung in diesem Zeitschlitz an die Basisstation sendet. Zur Einleitung des Auswahlverfahrens sendet die Basisstation in der Regel ein Kommando an die Transponder, durch das der Beginn einer Auswahlprozedur angezeigt wird. Nach Empfang des Kommandos werden in den Transpondern die jeweiligen Zufallszahlen gespeichert, die beispielsweise vorher im Transponder berechnet wurden. Wenn lediglich ein Transponder eine Kennung innerhalb eines Zeitschlitzes sendet, ist dieser Transponder innerhalb des Zeitschlitzes ausgewählt bzw. kann durch die Basisstation durch Senden eines Quittungssignals ausgewählt werden. Die Basisstation kann dann beispielsweise Schreib- und/oder Leseoperationen auf diesem Transponder ausführen. Wenn mehrere Transponder eine Kennung innerhalb des gleichen Zeitschlitzes senden, tritt eine Kollision auf. Abhängig von der Bitkodierung kann die Basisstation eine solche Kollision unmittelbar oder mit Verzögerung erkennen und den entsprechenden Zeitschlitz überspringen und versuchen Zeitschlitze abzuarbeiten, in denen keine Kollision auftritt, oder eine neue Auswahlprozedur durch Senden eines entsprechenden Kommandos an die Transponder einleiten. Da die Transponder üblicherweise neue Zufallszahlen erzeugen bzw. speichern, besteht die Möglichkeit, dass nun keine Kollision mehr auftritt.

Die Kollisionswahrscheinlichkeit hängt von der Anzahl der Transponder im Ansprechbereich der Basisstation und der Anzahl der zur Verfügung gestellten Zeitschlitze ab. Da die Anzahl der Transponder stark schwanken kann, kann eine statische Festlegung der Anzahl der Zeitschlitze zu Problemen führen. Ist die Anzahl der Zeitschlitze zu klein, nimmt die Kollisionswahrscheinlichkeit stark zu. Ist die Anzahl der Zeitschlitze zu groß, gibt es entsprechend viele Zeitschlitze, in denen kein Transponder Daten überträgt. Die für das Auswahlverfahren benötigte Zeit nimmt somit in beiden Fällen stark zu. Um einen optimalen Durchsatz zu erzielen, sollte die Anzahl der Zeitschlitze, in denen die Transponder Daten übertragen, in etwa gleich der Anzahl der Transponder gewählt werden.

Zur Lösung dieses Problems existiert das dynamische slotbasierte ALOHA-Verfahren, bei dem die Anzahl der zur Verfügung stehenden Zeitschlitze durch die Basisstation gesteuert werden kann. Beispielsweise kann die Basisstation ein Auswahlverfahren mit einer geringen Anzahl von Zeitschlitzen einleiten. Wenn hierbei häufig Kollisionen auftreten, kann die Basisstation ein neues Auswahlverfahren einleiten, bei dem die Anzahl der Zeitschlitze erhöht wird, wodurch die Kollisionswahrscheinlichkeit abnimmt. Die für ein derartiges dynamisches Verfahren benötigte Zeit ist jedoch relativ groß, da die Einstellung der optimalen Anzahl der Zeitschlitze viel Zeit in Anspruch nehmen kann. Weiterhin erfordert es aufgrund seiner Komplexität einen entsprechend hohen Schaltungsaufwand.

Zur Erzeugung einer Zufallszahl für die stochastischen Verfahren sind unterschiedliche Verfahren bekannt. So kann beispielsweise die Zeit zwischen einem Reset des Transponders und dem Zeitpunkt, an dem ein erstes Zeichen empfangen wird, als Basis zur Berechnung der Zufallszahl dienen. Andere Verfahren verknüpfen Zahlen aus zwei unterschiedlichen Speicherbereichen des Transponders miteinander, um die Zufallszahl zu ermitteln, wobei zur Verfeinerung zusätzlich noch ein empfangenes Datum in die Berechnung mit einbezogen werden kann. Weitere Verfahren verwenden ein lineares rückgekoppeltes Schieberegister zur Zufallszahlenerzeugung, das beispielsweise mit einer ungenauen Taktversorgung betrieben werden kann.

Die deterministischen Auswahlverfahren beruhen in der Regel auf einem binären Suchverfahren oder einem sogenannten Binary-Search-Algorithmus und setzen voraus, dass jedem Transponder im Ansprechbereich der Basisstation eine eindeutige Identifikationsbitfolge zugeordnet ist. Die Identifikationsbitfolge wird üblicherweise durch die Unique-Identification(U-ID) gebildet, die den Transpondern beispielsweise bei ihrer Herstellung zugewiesen wird. Die Eindeutigkeit der U-ID kann jedoch aufgrund der Vielzahl von U-ID-Spezifikationen bei offenen Systemen nicht immer garantiert werden.

Ein Auswahlverfahren, bei dem die Transponder anhand eines bitweisen Vergleichs ihrer eindeutigen, statisch vergebenen Identifikationsbitfolge mit einer Auswahlbitfolge ausgewählt werden, ist in der US 5 856 788 beschrieben. Die Auswahl erfolgt hierbei in einem Halbduplex-Verfahren, bei dem die Transponder jeweils ein Bit ihrer Identifikationsbitfolge übertragen und die Basisstation anschließend anhand der übermittelten Bitwerte ein Auswahlbit überträgt. Die Transponder vergleichen das entsprechende Bit ihrer Identifikationsbitfolge mit dem zugehörigen Auswahlbit anhand eines Vergleichskriteriums. Das Vergleichskriterium ist in diesem Fall der Gleich-Operator, d.h. Transponder, deren entsprechendes Bit ihrer Identifikationsbitfolge mit dem Auswahlbit übereinstimmt, bleiben aktiviert. Aufgrund des Halbduplex-Verfahrens wird relativ viel Zeit benötigt, bis ein Transponder ausgewählt ist.

In der ISO WD 18000-6 Mode 3 vom 01.02.2002 ist ein Auswahlverfahren beschrieben, bei dem die Auswahl ebenfalls anhand einer eindeutigen Identifikationsbitfolge erfolgt. Das Auswahlverfahren arbeitet im Vollduplex-Verfahren, wodurch die Auswahldauer abnimmt. Die Transponder werden auch hier anhand ihrer eindeutigen, statisch vergebenen Identifikationsbitfolge ausgewählt.

Die EP 1 321 889 A2 zeigt ein Identifikationsverfahren mit zwei Auswahlebenen.

Die EP 0 709 803 A2 zeigt ein Auswahlverfahren für ein kontaktloses IC-Kartensystem.

Die US 2003/0179078 A1 zeigt einen Transponder, bei dem eine Zufallszahl mittels eines linearen rückgekoppelten Schieberegisters erzeugt wird.

Der Erfindung liegt als technisches Problem die Bereitstellung eines Verfahrens der eingangs genannten Art zugrunde, welches zur Auswahl eines oder mehrerer Transponder aus einer Vielzahl von Transpondern durch eine Basisstation das Vorhandensein einer eindeutigen, statisch zugewiesenen U-ID in den Transpondern nicht zwingend voraussetzt und die zeitsparende Auswahl eines oder mehrerer Transponder auch bei einer stark schwankenden Anzahl von Transpondern im Ansprechbereich der Basisstation ermöglicht.

Die Erfindung löst dieses Problem durch die Bereitstellung eines Verfahrens mit den Merkmalen des Anspruchs 1.

Erfindungsgemäß wird, wenn mehrere Transponder im gleichen Zeitschlitz eine Kennung senden, zur Auswahl innerhalb dieses Zeitschlitzes in einer zweiten Auswahlebene eine weitere, stochastische und/oder deterministische, von der Basisstation gesteuerte Auswahlprozedur durchgeführt. Dies ermöglicht eine Adressvergabe beispielsweise auf Basis eines slotbasierten ALOHA-Verfahrens innerhalb einer ersten Auswahlebene, wobei die Anzahl der Zeitschlitze im Vergleich zu einem herkömmlichen slotbasierten ALOHA-Verfahren relativ klein gehalten werden kann. Es besteht die Möglichkeit, die Anzahl der Zeitschlitze in der ersten Auswahlebene konstant zu wählen oder dynamisch an die Anzahl der sich im Ansprechbereich der Basisstation befindlichen Transponder anzupassen. Aufgrund des stochastischen Charakters der ersten Auswahlebene wird das Vorhandensein einer eindeutigen, statisch zugewiesenen Identifikationsbitfolge bzw. einer U-ID in den Transpondern nicht zwingend voraussetzt.

Die zweite Auswahlebene ermöglicht die Auswahl eines oder mehrerer Transponder auch bei einer stark schwankenden Anzahl von Transpondern im Ansprechbereich der Basisstation. Wenn sich im Vergleich zur Anzahl der Zeitschlitze wenig Transponder im Ansprechbereich der Basisstation befinden, d.h. wenn innerhalb eines Zeitschlitzes keine Kollisionen auftreten bzw. von der Basisstation erkannt werden, wird in der ersten Auswahlebene lediglich ein slotbasiertes ALOHA-Verfahren mit einer relativ kleinen Anzahl von Zeitschlitzen durchgeführt. Dies ermöglicht eine zeitsparende Auswahl der Transponder. Wenn jedoch Kollisionen innerhalb eines Zeitschlitzes auftreten, d.h. wenn sich im Vergleich zur Anzahl der Zeitschlitze viele Transponder im Ansprechbereich der Basisstation befinden, ermöglicht die zweite Auswahlebene eine Auswahl durch Verwendung einer weiteren, von der ersten Auswahlebene unabhängigen stochastischen, deterministischen oder gemischt deterministisch-stochastischen Auswahlprozedur.

Für die deterministische Auswahlprozedur in den Transpondern wird jeweils eine Identifikationsbitfolge bereitgestellt, eine Auswahlbitfolge durch die Basisstation bitweise an die Transponder übertragen, in dem jeweiligen Transponder ein bitweiser Vergleich zwischen den entsprechenden Bits der Identifikationsbitfolge und der Auswahlbitfolge anhand eines vorgebbaren Vergleichskriteriums durchgeführt und anhand des Vergleichsergebnisses einem Selektionsbit eine Wertigkeit zugewiesen und der jeweilige Transponder abhängig von der Wertigkeit seines Selektionsbits ausgewählt. Dies ermöglicht eine zeitsparende Auswahl, da die Auswahl bitweise stattfindet und nicht die vollständige Bitfolge übertragen werden muss, bis eine Auswahl stattfinden kann.

In einer Weiterbildung des Verfahrens nach Anspruch 2 ist die stochastische Auswahlprozedur der zweiten Auswahlebene ein ALOHA-Verfahren, insbesondere kann dies ein slotbasiertes ALOHA-Verfahren sein. Die in dem entsprechenden Zeitschlitz aktiven Transponder, d.h. diejenigen Transponder, deren Zufallszahl der Nummer des aktuellen Zeitschlitzes entspricht, erzeugen bzw. speichern hierzu eine weitere Zufallszahl und nehmen an einem weiteren slotbasierten ALOHA-Verfahren teil, welches geschachtelt innerhalb der ersten Auswahlprozedur bzw. geschachtelt innerhalb des entsprechenden Zeitschlitzes durchgeführt wird.

In einer Weiterbildung des Verfahrens nach Anspruch 3 ist die deterministische Auswahlprozedur der zweiten Auswahlebene ein binäres Suchverfahren. Dies ermöglicht eine schnelle Auswahl eines oder einer Gruppe von Transpondern in der zweiten Auswahlebene.

Vorteilhaft wird gemäß Anspruch 4 in dem jeweiligen Transponder eine Zufallszahlbitfolge erzeugt und als Identifikationsbitfolge eine solche bereitgestellt, welche die Zufallszahlbitfolge enthält. Dies ermöglicht die Auswahl von Transpondern innerhalb der zweiten Auswahlebene, selbst wenn sich diese durch ihre U-ID nicht unterscheiden.

In einer Weiterbildung des Verfahrens nach Anspruch 5 wird zur Überprüfung, ob innerhalb des gleichen Zeitschlitzes mehr als ein Transponder eine Kennung sendet, die von der Basisstation empfangene Kennung als Quittungssignal mindestens teilweise durch die Basisstation an die Transponder zurück übertragen und in den Transpondern überprüft, ob die von der Basisstation gesendete Kennung mit der vom jeweiligen Transponder gesendeten Kennung übereinstimmt. Bei Nichtübereinstimmung nimmt der entsprechende Transponder innerhalb des Zeitschlitzes nicht weiter an der Auswahlprozedur teil. Wenn die Basisstation fälschlicherweise keine Kollision erkennt, wird auf diese Weise verhindert, dass Transponder fälschlicherweise ausgewählt werden.

In einer Weiterbildung des Verfahrens nach Anspruch 6 wird zur Übertragung der Kennung von einem Transponder zur Basisstation eine Kodierung vom 3Phase1-Typ verwendet, wie sie beispielsweise in der ISO WD 18000-6 Mode 3 beschrieben ist. Dies ermöglicht es der Basisstation, die Bitposition einer Kollision zu erkennen.

In einer Weiterbildung des Verfahrens nach Anspruch 7 wird die Zufallszahl der ersten Auswahlebene und/oder eine Zufallszahl oder Zufallszahlbitfolge der zweiten Auswahlebene mit Hilfe eines getakteten linearen rückgekoppelten Schieberegisters erzeugt, dessen Taktversorgung während Phasen mit einer im Vergleich zu einer durchschnittlichen Leistungsaufnahme erhöhten Leistungsaufnahme des Transponders deaktiviert wird. Dies ermöglicht eine Reduktion eines Spitzenwertes der Leistungsaufnahme des Transponders und erhöht folglich den Reichweitenbereich zwischen einer Basisstation und einem Transponder. Vorteilhaft wird gemäß Anspruch 8 die Taktversorgung während einer Datenübertragung zwischen der Basisstation und dem Transponder deaktiviert. Dies erhöht die Kommunikationsreichweite.

In einer Weiterbildung des Verfahrens nach Anspruch 9 wird die Taktversorgung mit Hilfe eines ansteuerbaren Logik-Gatters deaktiviert, das zwischen eine Taktversorgungseinheit und das Schieberegister eingeschleift wird. Dies ermöglicht eine einfach zu realisierende Aktivierung bzw. Deaktivierung der Taktversorgung.

In einer Weiterbildung des Verfahrens nach Anspruch 10 wird die Zufallszahl der ersten Auswahlebene und eine Zufallszahl oder Zufallszahlbitfolge der zweiten Auswahlebene mit Hilfe eines getakteten linearen rückgekoppelten Schieberegisters erzeugt. Dies verringert die benötigte Chipfläche und reduziert folglich die Herstellungskosten im Vergleich zu einer Realisierung, bei der jeder Zufallszahl ein Schieberegister zugeordnet ist. Weiterhin wird die Leistungsaufnahme vermindert, wodurch die überbrückbaren Entfernungen zwischen der Basisstation und dem Transponder zunehmen.

In einer Weiterbildung des Verfahrens nach Anspruch 11 werden ein erster Teil einer Anzahl von Bits des Schieberegisters der Zufallszahl der ersten Auswahlebene und der verbleibende Teil von Bits des Schieberegisters der zweiten Zufallszahl oder Zufallszahlbitfolge zugeordnet. Dies ermöglicht eine gleichzeitige Erzeugung beider Zufallszahlen.

In einer Weiterbildung des Verfahrens nach Anspruch 12 wird die Zufallszahl der ersten Auswahlebene mit Hilfe des Schieberegisters erzeugt und abgespeichert. Anschließend wird die Zufallszahl der zweiten Auswahlebene mit Hilfe des Schieberegisters erzeugt und getrennt von der Zufallszahl der ersten Auswahlebene abgespeichert. Das Auslesen des Schieberegisterinhalts zur Gewinnung der Zufallszahlen wird jeweils beim Eintritt in die jeweilige Auswahlebene angestoßen. Dadurch steht jeweils die gesamte Breite des Schieberegisters für die Zufallszahlen zur Verfügung.

In einer Weiterbildung des Verfahrens nach Anspruch 13 wird das Schieberegister nach der Erzeugung der Zufallszahl der ersten Auswahlebene mit reduziertem Takt betrieben. Dies reduziert die Leistungsaufnahme und erhöht folglich die Reichweite.

In einer Weiterbildung des Verfahrens nach Anspruch 14 wird eine weitere Zufallszahl durch logische Verknüpfung der Zufallszahl oder Zufallszahlbitfolge der zweiten Auswahlebene mit transponderspezifischen Daten erzeugt, wenn der Wertebereich der Zufallszahl oder Zufallszahlbitfolge der zweiten Auswahlebene für die zweite Auswahlebene nicht ausreicht. Die weitere Zufallszahl kann dann für die zweite Auswahlebene verwendet werden.

Vorteilhafte Ausführungsformen der Erfindung sind in den Zeichnungen dargestellt und werden nachfolgend beschrieben. Hierbei zeigen schematisch:
- Fig. 1: ein Flussdiagramm eines Auswahlverfahrens mit zwei Auswahlebenen,
- Fig. 2: ein Diagramm eines zeitlichen Ablaufs des Auswahlverfahrens von Fig. 1 in einer exemplarischen Auswahlsituation und
- Fig. 3: ein Blockschaltbild einer Prinzipanordnung zur Erzeugung von Zufallszahlen mit Hilfe eines linearen rückgekoppelten Schieberegisters.

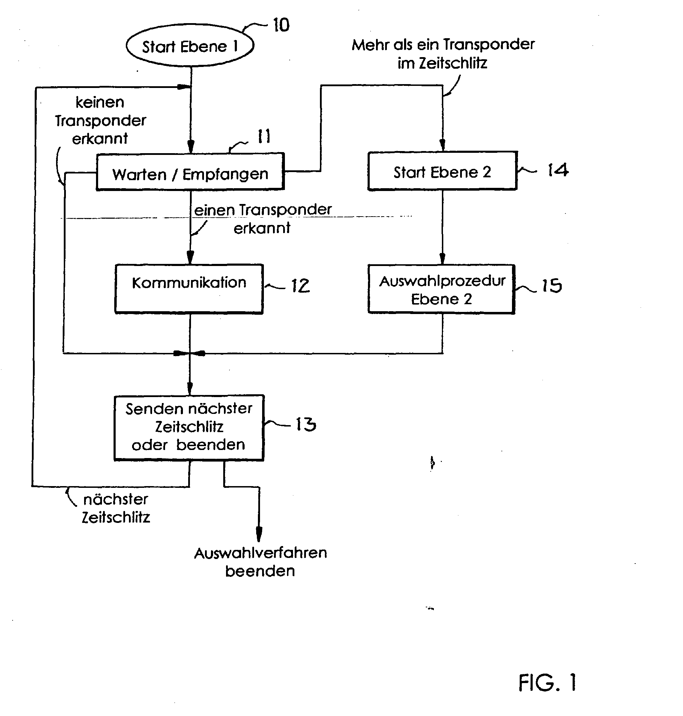

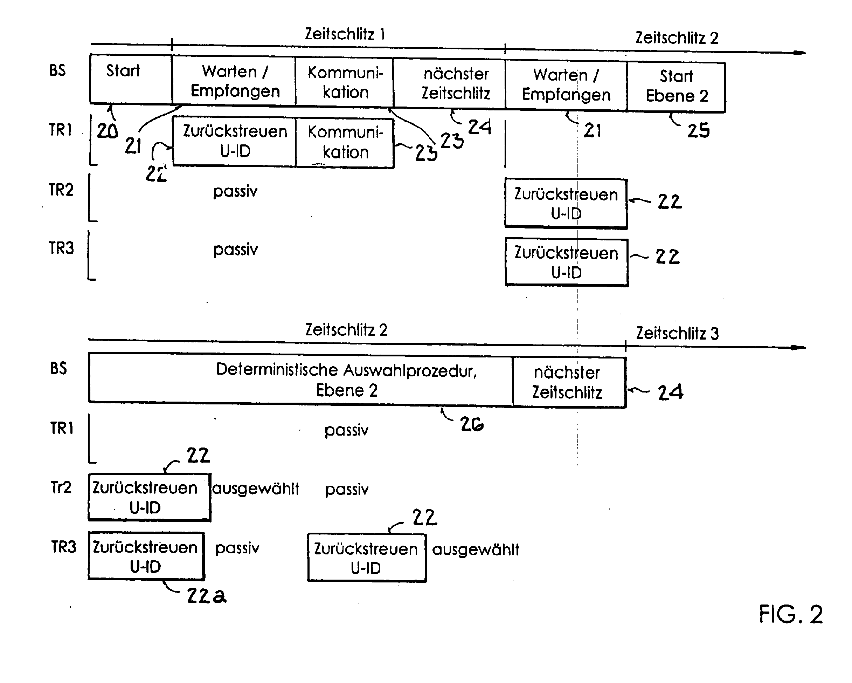

Fig. 1 zeigt ein Flussdiagramm eines Auswahlverfahrens zur Auswahl eines oder mehrerer rückstreubasierter Transponder aus einer Vielzahl von Transpondern durch eine Basisstation mit zwei Auswahlebenen. Fig. 2 zeigt ein Diagramm eines entsprechenden zeitlichen Ablaufs des Auswahlverfahrens von Fig. 1 in einer exemplarischen Auswahlsituation, bei der sich drei Transponder TR1 bis TR3 im Ansprechbereich der Basisstation BS befinden, die nacheinander ausgewählt werden.

In einem Schritt 10 von Fig. 1 startet das Auswahlverfahren in einer ersten Auswahlebene. Typischerweise sendet die Basisstation BS hierzu ein in Fig. 2 gezeigtes Kommando 20 an die Transponder TR1 bis TR3, durch das der Beginn einer Auswahlprozedur angezeigt wird. Nach Empfang des Kommandos 20 werden in den Transpondern TR1 bis TR3 jeweilige Zufallszahlen erzeugt bzw. berechnet und anschließend abgespeichert sowie ein interner Zeitschlitznummernzähler auf einen Anfangswert gesetzt.

In einem Schritt 11 von Fig. 1 wartet die Basisstation BS auf eine Rückmeldung der Transponder TR1 bis TR3 und empfängt diese, falls eine Kennung gesendet wird. In Fig. 2 ist dies durch einen Warten/Empfangen-Zeitraum 21 dargestellt.

Die Transponder TR1 bis TR3 vergleichen den Wert ihres internen Zeitschlitznummernzählers mit der abgespeicherten Zufallszahl und senden bei Übereinstimmung eine Kennung in Form ihrer U-ID. Bei der in Fig. 2 gezeigten Auswahlsituation weist lediglich der Transponder TR1 die zum ersten Zeitschlitz gehörige Zufallszahl auf. Der Transponder TR1 überträgt folglich seine U-ID mit einer Kodierung vom 3Phase1-Typ in einem Rückstreu-Zeitraum 22 innerhalb des ersten Zeitschlitzes an die Basisstation. Die Basisstation empfängt die U-ID und erkennt mit Hilfe der Kodierung, dass keine Kollision stattgefunden hat, d.h. kein weiterer Transponder seine U-ID gleichzeitig mit TR1 übertragen hat. Die Transponder TR2 und TR3 bleiben passiv, da deren Zufallszahl nicht mit der Nummer des momentanen Zeitschlitzes übereinstimmt, und warten auf ein Kommando von der Basisstation, das den nächsten Zeitschlitz einleitet.

Der Transponder TR1 gilt nun als ausgewählt, wobei zur endgültigen Auswahl noch weitere Schritte durchgeführt werden können, beispielsweise die Übertragung eines Quittungssignals von der Basisstation an die Transponder. In einem Schritt 12 von Fig. 1 kommuniziert die Basisstation BS bidirektional mit dem Transponder TR1 und kann beispielsweise Schreib- und/oder Leseoperationen auf dem ausgewählten Transponder TR1 ausführen. In Fig. 2 ist dies durch einen Kommunikations-Zeitraum 23 dargestellt.

Aufgrund von Phasendrehungen und stark unterschiedlichen Pegeln kann es insbesondere bei großen Entfernungen zwischen den Transpondern TR1 bis TR3 und der Basisstation BS trotz der geeigneten Kodierung vorkommen, dass eine Kollision auftritt, die nicht von der Basisstation BS erkannt wird. Zur Kollisionserkennung besteht neben einer geeigneten Kodierung die in Fig. 2 nicht gezeigte Möglichkeit, dass die von der Basisstation BS empfangene U-ID durch diese an die Transponder TR1 bis TR3 als Quittungssignal zurück übertragen wird. In den jeweiligen Transpondern TR1 bis TR3 wird dann überprüft, ob die von der Basisstation BS gesendete Kennung bzw. U-ID mit der vom jeweiligen Transponder TR1 bis TR3 gesendeten Kennung übereinstimmt. Wenn in einem Transponder festgestellt wird, dass keine Übereinstimmung vorliegt, nimmt er nicht weiter an der momentanen Auswahlprozedur in diesem Zeitschlitz teil. Bei Übereinstimmung ist der entsprechende Transponder ausgewählt.

Nach abgeschlossener Kommunikation mit dem Transponder TR1 in Schritt 12 überträgt die Basisstation BS ein Nächster-Zeitschlitz-Kommando an die Transponder TR1 bis TR3 in einem Schritt 13 von Fig. 1, worauf diese ihren internen Zeitschlitznummernzähler inkrementieren. In Fig. 2 entspricht dies einem Zeitraum 24. Alternativ kann die Basisstation BS auch die Nummer des aktuellen Zeitschlitzes an die Transponder TR1 bis TR3 übertragen. Der zuvor ausgewählte Transponder TR1 nimmt nicht weiter am Auswahlverfahren teil. Wenn die Basisstation BS das Auswahlverfahren beenden möchte, sendet sie im Schritt 13 anstatt des Nächster-Zeitschlitz-Kommandos ein Kommando an die Transponder TR1 bis TR3, das diesen das Auswahlverfahrensende anzeigt. Sie wechseln dann in einen entsprechenden Betriebszustand.

Bei Fortsetzung des Auswahlverfahrens wird im Flussdiagramm von Fig. 1 zum Schritt 11 zurückgekehrt, d.h. die Basisstation BS wartet auf die Rückmeldung der Transponder TR2 und TR3 und empfängt diese, falls eine Kennung gesendet wird. In Fig. 2 ist dies durch einen erneuten Warten/Empfangen-Zeitraum 21 dargestellt.

Da bei der in Fig. 2 gezeigten Auswahlsituation die Transponder TR2 und TR3 identische Zufallszahlen aufweisen, senden diese im Anschluss an das Nächster-Zeitschlitz-Kommando 24 im zugehörigen Rückstreu-Zeitraum 22 zeitgleich ihre jeweilige U-ID, wodurch eine Kollision an Bitpositionen entsteht, deren Bit-Werte nicht übereinstimmen. Aufgrund der Bitkodierung erkennt die Basisstation die Kollision und verzweigt anstatt zum Schritt 12 zu einem Schritt 14 von Fig. 1.

Im Schritt 14 von Fig. 1 sendet die Basisstation BS ein in Fig. 2 gezeigtes Kommando 25 an die Transponder TR1 bis TR3, durch das der Beginn einer Auswahlprozedur einer zweiten Auswahlebene angezeigt wird.

In einem Schritt 15 wird die zweite Auswahlprozedur geschachtelt innerhalb des zweiten Zeitschlitzes durchgeführt, wobei es sich um eine stochastische, deterministische oder eine gemischt deterministisch-stochastische Auswahlprozedur handeln kann.

Als stochastisches Verfahren kann beispielsweise ein einfaches ALOHA-Verfahren, ein slotbasiertes oder ein dynamisches slotbasiertes ALOHA-Verfahren dienen. Nach Empfang des Start-Kommandos 25 werden in diesem Fall in den Transpondern TR2 und TR3 erneut jeweils Zufallszahlen erzeugt bzw. berechnet und anschließend abgespeichert sowie ein interner Subzeitschlitznummernzähler auf einen Anfangswert gesetzt. Es wird dann ein geschachteltes ALOHA-Verfahren innerhalb eines Zeitschlitzes des übergeordneten slotbasierten ALOHA-Verfahrens durchgeführt.

Als deterministisches Verfahren kann beispielsweise eines der herkömmlichen binären Suchverfahren verwendet werden. Ein geeignetes Beispiel hierfür ist das in der oben zitierten Norm ISO WD 18000-6 Mode 3 vom 01.02.2002 beschriebene Auswahlverfahren, bei dem die Auswahl anhand einer U-ID erfolgt.

Ein gemischt deterministisch-stochastisches Auswahlverfahren, wie es vorliegend für die zweite Auswahlebene verwendbar ist, ist in der nicht vorveröffentlichten deutschen Patentanmeldung DE 103 36 308 A1 der Anmelderin beschrieben, die hiermit vollinhaltlich durch Bezugnahme zum Inhalt der vorliegenden Anmeldung gemacht wird. Die Auswahl erfolgt hierbei anhand einer Identifikationsbitfolge, die einen statischen Anteil bzw. eine U-ID und einen dynamischen Anteil enthält, der auf einer im Transponder erzeugten Zufallszahl beruht. Zur Auswahl wird in den Transpondern jeweils eine solche Identifikationsbitfolge bereitgestellt, eine Auswahlbitfolge durch die Basisstation bitweise an die Transponder übertragen, in dem jeweiligen Transponder ein bitweiser Vergleich zwischen den entsprechenden Bits der Identifikationsbitfolge und der Auswahlbitfolge anhand eines vorgebbaren Vergleichskriteriums durchgeführt und anhand des Vergleichsergebnisses einem Selektionsbit eine Wertigkeit zugewiesen. Der jeweilige Transponder wird abhängig von der Wertigkeit seines Selektionsbits ausgewählt.

Die in Fig. 2 gezeigte zweite Auswahlprozedur ist eine deterministische Auswahlprozedur und wird gemäß ISO WD 18000-6 Mode 3 durchgeführt. Die Basisstation BS überträgt hierzu in einem Zeitraum 26 bitweise die Auswahlbitfolge und der Transponder TR2 streut im Vollduplexbetrieb im Rückstreu-Zeitraum 22 seine Identifikationsbitfolge an die Basisstation zurück, die mit der Auswahlbitfolge übereinstimmt. Der Transponder TR2 ist folglich ausgewählt. Da die Identifikationsbitfolge des Transponders TR3 mit der Auswahlbitfolge nicht übereinstimmt, überträgt dieser im Rückstreu-Zeitraum 22a lediglich einen Teil seiner Identifikationsbitfolge an die Basisstation zurück. Das Rückstreuen wird zu einem Zeitpunkt abgebrochen, an dem ein Bit der Auswahlbitfolge nicht mit einem zugehörigen Bit seiner Identifikationsbitfolge übereinstimmt. Der Transponder TR3 bleibt passiv. Anstatt einer Einzelauswahl besteht alternativ die Möglichkeit, Gruppen von Transpondern auszuwählen, d.h. in diesem Fall TR2 und TR3 gleichzeitig. Nach der Auswahl findet eine nicht gezeigte, bidirektionale Datenübertragung zwischen dem Transponder TR2 und der Basisstation statt.

Zur anschließenden Auswahl des Transponders TR3 überträgt die Basisstation BS innerhalb der deterministischen Auswahlprozedur erneut einen nicht gezeigten Startbefehl, der einen zweiten deterministischen Auswahlvorgang einleitet. Da der Transponder TR2 bereits im vorangegangenen Auswahlvorgang ausgewählt wurde, nimmt er an dem nachfolgenden Auswahlvorgang nicht mehr teil.

Die Basisstation BS überträgt nun bitweise eine Auswahlbitfolge und der Transponder TR3 streut im Vollduplexbetrieb seine Identifikationsbitfolge an die Basisstation zurück, die mit der Auswahlbitfolge übereinstimmt. Nach der Auswahl findet eine nicht gezeigte, bidirektionale Datenübertragung zwischen dem Transponder TR3 und der Basisstation statt.

Im Anschluss sendet die Basisstation ein Nächster-Zeitschlitz-Kommando an die Transponder TR1 bis TR3 im Schritt 13 von Fig. 1, worauf diese ihren internen Zeitschlitznummernzähler inkrementieren. In Fig. 2 entspricht dies dem Zeitraum 24. Da sich in der gezeigten Auswahlsituation keine weiteren Transponder im Ansprechbereich der Basisstation BS befinden, empfängt diese in den nachfolgenden Zeitschlitzen keine weiteren Kennungen. Nachdem alle Zeitschlitze abgearbeitet sind, beendet die Basisstation BS das Auswahlverfahren durch Senden eines entsprechenden Kommandos.

Das beschriebene Auswahlverfahren ermöglicht die zeitsparende Auswahl eines oder mehrerer Transponder aus einer Vielzahl von Transpondern durch eine Basisstation auch bei einer stark schwankenden Anzahl von Transpondern im Ansprechbereich der Basisstation, wobei das Vorhandensein einer eindeutigen, statisch zugewiesenen U-ID in den Transpondern nicht zwingend voraussetzt ist.

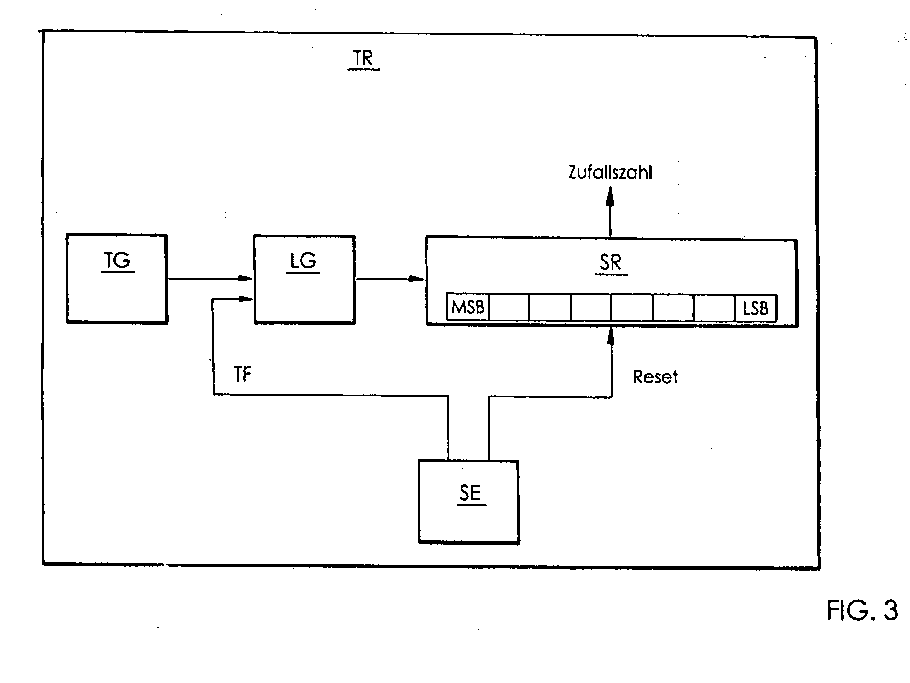

Fig. 3 zeigt ein Blockschaltbild einer Prinzipanordnung zur Erzeugung von Zufallszahlen, die in einen Transponder TR integriert ist. Die Anordnung umfasst einen Taktgenerator TG, ein ansteuerbares Logik-Gatter LG, eine Steuereinheit SE und ein getaktetes lineares rückgekoppeltes Schieberegister SR, das die Zufallszahlen liefert. Das Schieberegister wird von der Steuereinheit SE im Verlauf einer Initialisierung mit einem Reset-Signal beaufschlagt, wodurch das Schieberegister einen definierten Anfangswert einnimmt.

Der Taktgenerator TG dient zur Taktversorgung des Schieberegisters SR. Das Logik-Gatter LG ist zwischen den Taktgenerator TG und das Schieberegister SR bzw. einen Takteingang des Schieberegisters SR eingeschleift. Das Logik-Gatter LG wird mit einem Taktfreigabesignal TF beaufschlagt, das von der Steuereinheit SE bereitgestellt wird. Wenn das Taktfreigabesignal TF einen Freigabepegel führt, liegt ein Taktsignal des Taktgenerators TG am Schieberegister an, d.h. seine Taktversorgung ist aktiv und es erzeugt im Takt der Taktversorgung fortlaufend Zufallszahlen. Wenn das Taktfreigabesignal TF einen Sperrpegel führt, ist das Taktsignal vom Schieberegister SR abgekoppelt, d.h. seine Taktversorgung ist deaktiviert und es werden keine neuen Zufallszahlen erzeugt. Bei deaktivierter Taktversorgung nimmt die Leistungsaufnahme der Anordnung stark ab.

Die Steuereinheit SE steuert das Logik-Gatter LG derart an, dass die Taktversorgung des Schieberegisters SR während Phasen mit einer im Vergleich zu einer durchschnittlichen Leistungsaufnahme erhöhten Leistungsaufnahme des Transponders TR deaktiviert wird. Phasen mit erhöhter Leistungsaufnahme treten insbesondere während einer Datenübertragung zwischen einer Basisstation und dem Transponder TR auf.

Wenn in der zweiten Auswahlebene eine stochastische oder eine gemischt deterministisch-stochastische Auswahlprozedur verwendet wird, kann es notwendig werden, eine zweite Zufallszahl bzw. Zufallszahlenbitfolge zu erzeugen. Mit Hilfe der in Fig. 3 gezeigten Anordnung ist es möglich, sowohl eine Zufallszahl der ersten Auswahlebene als auch eine Zufallszahl bzw. Zufallszahlbitfolge der zweiten Auswahlebene zu erzeugen, wobei zu deren Erzeugung lediglich ein einziges Schieberegister SR benötigt wird. Dies verringert die benötigte Chipfläche und reduziert folglich die Herstellungskosten im Vergleich zu einer Realisierung, bei der jeder Auswahlebene ein Schieberegister zur Zufallszahlerzeugung zugeordnet ist. Weiterhin wird die Leistungsaufnahme vermindert, wodurch die überbrückbaren Entfernungen zwischen der Basisstation und dem Transponder TR zunehmen.

Bei einer ersten Variante zur Erzeugung von zwei unterschiedlichen Zufallszahlen mit lediglich einem Schieberegister SR ist die Anzahl der Bits des Schieberegisters größer als dies zur Erzeugung der Zufallszahl der ersten Auswahlebene notwendig wäre.

Wenn ein Schieberegister SR mit einer Breite von 8 Bits verwendet wird, können beispielsweise 5 Bits des Schieberegisters SR der Zufallszahl der ersten Auswahlebene und 3 Bits des Schieberegisters SR der Zufallszahl der zweiten Auswahlebene zugeordnet werden. Mit Hilfe der 5 Bits der ersten Auswahlebene lassen sich bis zu 32 unterschiedliche Zeitschlitze innerhalb der ersten Auswahlebene unterscheiden und mit Hilfe der 3 Bits der zweiten Auswahlebene lassen sich bis zu 8 unterschiedliche Transponder adressieren, wobei zu beachten ist, dass nicht alle Bits des Schieberegisters SR gleichzeitig Null sein können.

Wenn dieser Wertebereich der Zufallszahl für die zweite Auswahlebene nicht ausreicht, kann eine weitere Zufallszahl durch logische Verknüpfung der Zufallszahl der zweiten Auswahlebene mit transponderspezifischen Daten erzeugt werden, die als Zufallszahl für die zweite Auswahlebene verwendet wird. Bei den transponderspezifischen Daten kann es sich um Daten aus einem Speicherbereich des Transponders handeln, der mit Hilfe der Zufallszahl der zweiten Auswahlebene adressiert wird. Bei der logischen Verknüpfung kann es sich um beliebige logische Operationen, beispielsweise eine UND-, ODER- und/oder eine XOR-Operation, handeln.

Bei dem beschriebenen Verfahren wird das Schieberegister SR so lange mit der Taktversorgung beaufschlagt, bis das Auswahlverfahren der ersten Auswahlebene durch die Basisstation durch Senden eines entsprechenden Kommandos eingeleitet wird. Der binäre Inhalt des Schieberegisters wird nach dem Empfang des Kommandos ausgelesen und in eine Zufallszahl der ersten und in eine Zufallszahl der zweiten Ebene aufgetrennt, d.h. die Zufallszahlen werden gleichzeitig erzeugt. Anschließend wird das Schieberegister SR deaktiviert, wodurch die Leistungsaufnahme reduziert wird.

In einer alternativen Ausführungsform wird nach dem Empfang des Kommandos die Zufallszahl der ersten Auswahlebene vom Schieberegister erzeugt, aus diesem ausgelesen und abgespeichert, wobei die vollständige Breite des Schieberegisters für die Zufallszahl zur Verfügung steht. Anschließend bleibt die Taktversorgung des Schieberegisters SR aktiviert, bis eine weitere Zufallszahl in der zweiten Auswahlebene benötigt wird. Die Zufallszahl der zweiten Auswahlebene wird dann aus dem Schieberegister entnommen und getrennt von der Zufallszahl der ersten Auswahlebene abgespeichert, wodurch auch für die Zufallszahl der zweiten Ebene die vollständige Breite des Schieberegisters zur Verfügung steht. Diese Vorgehensweise erhöht folglich die zur Verfügung stehenden Wertebereiche der Zufallszahlen der ersten und der zweiten Ebene, ist jedoch im Vergleich zur gleichzeitigen Erzeugung der Zufallszahlen bezüglich der Leistungsaufnahme ungünstiger. Zur Reduktion der Leistungsaufnahme kann das Schieberegister nach der Erzeugung der ersten Zufallszahl mit reduziertem Takt weiterbetrieben werden bzw. die Taktversorgung kann während einer Kommunikation mit der Basisstation deaktiviert werden.

## Patentansprüche

1. Verfahren zur Auswahl eines oder mehrerer, insbesondere rückstreubasierter, Transponder aus einer Vielzahl von Transpondern (TR1, TR2, TR3) durch eine Basisstation (BS), bei dem in einer ersten Auswahlebene eine erste, von der Basisstation (BS) gesteuerte Auswahlprozedur durchgeführt wird, bei der
- die Transponder (TR1, TR2, TR3) jeweils eine Zufallszahl erzeugen,
- die Basisstation (BS) nummerierte Zeitschlitze vorgibt,
- jeder Transponder, dessen Zufallszahl der Nummer eines Zeitschlitzes entspricht, eine Kennung in diesem Zeitschlitz an die Basisstation sendet,
- ein Transponder (TR1) ausgewählt wird, wenn außer ihm kein weiterer Transponder eine Kennung innerhalb des gleichen Zeitschlitzes sendet, und
- wenn mehrere Transponder (TR2, TR3) im gleichen Zeitschlitz eine Kennung senden, zur Auswahl innerhalb dieses Zeitschlitzes in einer zweiten Auswahlebene eine weitere, stochastische, deterministische oder gemischt deterministisch-stochastische, von der Basisstation (BS) gesteuerte Auswahlprozedur durchgeführt wird,
**dadurch gekennzeichnet, dass**
- für die deterministische Auswahlprozedur der zweiten Auswahlebene
- in den Transpondern jeweils eine Identifikationsbitfolge bereitgestellt wird,
- eine Auswahlbitfolge durch die Basisstation bitweise an die Transponder übertragen wird,
- in dem jeweiligen Transponder ein bitweiser Vergleich zwischen den entsprechenden Bits der Identifikationsbitfolge und der Auswahlbitfolge anhand eines vorgebbaren Vergleichskriteriums durchgeführt wird und anhand des Vergleichsergebnisses einem Selektionsbit eine Wertigkeit zugewiesen wird und
- der jeweilige Transponder abhängig von der Wertigkeit seines Selektionsbits ausgewählt wird.

2. Verfahren nach Anspruch 1, **dadurch gekennzeichnet, dass** die stochastische Auswahlprozedur der zweiten Auswahlebene ein ALOHA-Verfahren, insbesondere ein slotbasiertes ALOHA-Verfahren, ist.

3. Verfahren nach Anspruch 1 oder 2, **dadurch gekennzeichnet, dass** die deterministische Auswahlprozedur der zweiten Auswahlebene ein binäres Suchverfahren ist.

4. Verfahren nach einem der vorhergehenden Ansprüche, **dadurch gekennzeichnet, dass** als Identifikationsbitfolge eine solche bereitgestellt wird, welche eine Zufallszahlbitfolge enthält, die hierfür in dem jeweiligen Transponder erzeugt wird.

5. Verfahren nach einem der vorhergehenden Ansprüche, **dadurch gekennzeichnet, dass**
- zur Überprüfung, ob innerhalb des gleichen Zeitschlitzes mehr als ein Transponder eine Kennung sendet, die von der Basisstation empfangene Kennung mindestens teilweise durch die Basisstation an die Transponder zurück übertragen wird,
- in den jeweiligen Transpondern überprüft wird, ob die von der Basisstation gesendete Kennung mit der vom jeweiligen Transponder gesendeten Kennung übereinstimmt, und
- bei Nichtübereinstimmung der entsprechende Transponder innerhalb des Zeitschlitzes nicht weiter an der Auswahlprozedur teilnimmt.

6. Verfahren nach einem der vorhergehenden Ansprüche, **dadurch gekennzeichnet, dass** zur Übertragung der Kennung von einem Transponder zur Basisstation eine Kodierung vom 3Phase1-Typ verwendet wird.

7. Verfahren nach einem der vorhergehenden Ansprüche, **dadurch gekennzeichnet, dass** die Zufallszahl der ersten Auswahlebene und/oder eine Zufallszahl oder Zufallszahlbitfolge der zweiten Auswahlebene mit Hilfe eines getakteten linearen rückgekoppelten Schieberegisters (SR) erzeugt wird, dessen Taktversorgung während Phasen mit einer im Vergleich zu einer durchschnittlichen Leistungsaufnahme erhöhten Leistungsaufnahme des Transponders deaktiviert wird.

8. Verfahren nach Anspruch 7, **dadurch gekennzeichnet, dass** die Taktversorgung des Schieberegisters (SR) während einer Datenübertragung zwischen der Basisstation (BS) und dem Transponder (TR1, TR2, TR3) deaktiviert wird.

9. Verfahren nach Anspruch 7 oder 8, **dadurch gekennzeichnet, dass** die Taktversorgung des Schieberegisters (SR) mit Hilfe eines ansteuerbaren Logik-Gatters (LG) deaktiviert wird, das zwischen eine Taktversorgungseinheit (TG) und das Schieberegister eingeschleift wird.

10. Verfahren nach einem der vorhergehenden Ansprüche, **dadurch gekennzeichnet, dass** die Zufallszahl der ersten Auswahlebene und eine Zufallszahl oder Zufallszahlbitfolge der zweiten Auswahlebene mit Hilfe eines getakteten linearen rückgekoppelten Schieberegisters (SR) erzeugt wird.

11. Verfahren nach Anspruch 10, **dadurch gekennzeichnet, dass** ein erster Teil einer Anzahl von Bits des Schieberegisters der Zufallszahl der ersten Auswahlebene und der verbleibende Teil von Bits des Schieberegisters der zweiten Zufallszahl oder Zufallszahlbitfolge zugeordnet werden.

12. Verfahren nach Anspruch 10, **dadurch gekennzeichnet, dass** die Zufallszahl der ersten Auswahlebene mit Hilfe des Schieberegisters erzeugt und abgespeichert wird und anschließend die Zufallszahl oder Zufallszahlbitfolge der zweiten Auswahlebene mit Hilfe des Schieberegisters erzeugt und getrennt von der Zufallszahl der ersten Auswahlebene abgespeichert wird.

13. Verfahren nach Anspruch 12, **dadurch gekennzeichnet, dass** das Schieberegister nach der Erzeugung der Zufallszahl der ersten Auswahlebene mit reduziertem Takt betrieben wird.

14. Verfahren nach einem der Ansprüche 10 bis 13, **dadurch gekennzeichnet, dass** eine weitere Zufallszahl durch logische Verknüpfung der Zufallszahl oder Zufallszahlbitfolge der zweiten Auswahlebene mit transponderspezifischen Daten erzeugt wird, wenn der Wertebereich der Zufallszahl oder Zufallszahlbitfolge der zweiten Auswahlebene für die zweite Auswahlebene nicht ausreicht.

## Claims

1. Method for selection of one or more, particularly backscatter-based, transponders from a plurality of transponders (TR1, TR2, TR3) by a base station (BS), in which a first selection procedure, which is controlled by the base station (BS), is performed in a first selection plane, in which
- the transponders (TR1, TR2, TR3) each generate a random number,
- the base station (BS) presets numbered time slots,
- each transponder, the random number of which corresponds with the number of a time slot, transmits an identification in this time slot to the base station,
- a transponder (TR1) is selected when apart from it no further transponder transmits an identification within the same slot and
- if several transponders (TR2, TR3) transmit an identification in the same time slot a further stochastic, deterministic or mixed deterministic-stochastic selection procedure, which is controlled by the base station (BS), is performed in a second selection plane for selection within this time slot,
**characterised in that**
- for the deterministic selection procedure of the second selection plane
- a respective identification sequence is provided in the transponders,
- a selection bit sequence is transmitted bit-by-bit to the transponders by the base station,
- in the respective transponder a bit-by-bit comparison between the corresponding bits of the identification bit sequence and the selection bit sequence is undertaken on the basis of a predeterminable comparison criterion and a significance is allocated to a selection bit on the basis of the comparison result and
- the respective transponder is selected in dependence on the significance of its selection bit.

2. Method according to claim 1, **characterised in that** the stochastic selection procedure of the second selection plane is an ALOHA method, particularly a slot-based ALOHA method.

3. Method according to claim 1 or 2, **characterised in that** the deterministic selection procedure of the second selection plane is a binary search process.

4. Method according to any one of the preceding claims, **characterised in that** as identification bit sequence there is provided such which contains a random number bit sequence produced for this purpose in the respective transponder.

5. Method according to any one of the preceding claims, **characterised in that**
- for checking whether within the same time slot more than one transponder transmits an identification the identification received by the base station is transmitted at least in part back to the transponder by the base station,
- it is checked in the respective transponders whether the identification transmitted by the base station corresponds with the identification transmitted by the respective transponder and
- in the case of non-correspondence the corresponding transponder does not further participate in the selection procedure within the time slot.

6. Method according to any one of the preceding claim, **characterised in that** a coding of 3Phase1-type is used for transmission of the identification from a transponder to the base station.

7. Method according to any one of the preceding claims, **characterised in that** the random number of the first selection plane and/or a random number or random number bit sequence of the second selection plane is produced with the help of a clock-pulse-controlled linear feedback shift register (SR), the clock pulse supply of which is deactivated during phases with a power take-up, which is increased by comparison with an average power take-up of the transponder.

8. Method according to claim 7, **characterised in that** the clock pulse supply of the shift register (SR) is deactivated during a data transmission between the base station (BS) and the transponder (TR1, TR2, TR3).

9. Method according to claim 7 or 8, **characterised in that** the clock pulse supply of the shift register (SR) is deactivated with the help of a logic gate (LG) which is controllable in drive and which is connected between a clock pulse supply unit (TG) and the shift register.

10. Method according to any one of the preceding claims, **characterised in that** the random number of the first selection plane and a random number or random number bit sequence of the second selection plane is produced with the help of a clock-pulse-controlled linear feedback shift register (SR).

11. Method according to claim 10, **characterised in that** a first part of a number of bits of the shift register is associated with the random number of the first selection plane and the remaining part of bits of the shift register is associated with the second random number or random number bit sequence.

12. Method according to claim 10, **characterised in that** the random number of the first selection plane is produced and stored with the help of the shift register and subsequently the random number or random number bit sequence of the second selection plane is produced with the help of the shift register and stored separately from the random number of the first selection plane.

13. Method according to claim 12, **characterised in that** the shift register after generation of the random number of the first selection plane is operated at reduced cycle rate.

14. Method according to any one of claims 10 to 13, **characterised in that** a further random number is produced by logical linking of the random number or random number bit sequence of the second selection plane with transponder-specific data when the value range of the random number or random number bit sequence of the second selection plane is not sufficient for the second selection plane.

## Revendications

1. Procédé de sélection d'un ou plusieurs transpondeurs, plus particulièrement de transpondeurs basés sur la rétrodiffusion, parmi une pluralité de transpondeurs (TR1, TR2, TR3) par une station de base (BS), procédé dans lequel on effectue dans un premier plan de sélection un premier processus de sélection commandé par la station de base (BS), processus au cours duquel
. les transpondeurs (TR1, TR2, TR3) génèrent chacun un nombre aléatoire,
. la station de base (BS) spécifie des créneaux temporels numérotés,
. chaque transpondeur dont le nombre aléatoire correspond au numéro d'un créneau temporel envoie une identification dans ce créneau temporel à la station de base,
. un transpondeur (TR1) est sélectionné lorsqu'à part lui, aucun autre transpondeur n'a envoyé une identification dans le même créneau temporel, et
. lorsque plusieurs transpondeurs (TR2, TR3) envoient une identification dans le même créneau temporel, on procède, pour effectuer la sélection dans ce créneau temporel, dans un deuxième plan de sélection, à un processus de sélection supplémentaire stochastique, déterministe ou stochastique et déterministe combinés, commandé par la station de base (BS),
**caractérisé en ce que**
. pour le processus de sélection déterministe du deuxième plan de sélection
- on fournit dans chaque transpondeur une séquence de bits d'identification,
- la station de base transmet une séquence de bits de sélection aux transpondeurs,
- dans chacun des transpondeurs on effectue une comparaison bit par bit entre les bits correspondant à la séquence de bits d'identification et ceux de la séquence de bits de sélection à l'aide d'un critère de comparaison pouvant être prédéfini, et à l'aide du résultat de la comparaison, on attribue une valence à un bit de sélection, et
- le transpondeur respectif est sélectionné en fonction de la valence de son bit de sélection.

2. Procédé selon la revendication 1, **caractérisé en ce que** le processus de sélection stochastique du deuxième plan de sélection est un procédé ALOHA, plus particulièrement un procédé ALOHA à créneaux.

3. Procédé selon la revendication 1 ou 2, **caractérisé en ce que** le processus de sélection déterministe du deuxième plan de sélection est un procédé de recherche binaire.

4. Procédé selon l'une quelconque des revendications précédentes, **caractérisé en ce que** l'on fournit comme séquence de bits d'identification une séquence comprenant une séquence de bits de nombre aléatoire, générée à cet effet dans le transpondeur respectif.

5. Procédé selon l'une quelconque des revendications précédentes, **caractérisé en ce que**
. pour vérifier si dans le même créneau temporel, plus d'un transpondeur émet une identification, on retransmet au moins partiellement l'identification reçue de la station de base au transpondeur par l'intermédiaire de la station de base,
. l'on vérifie dans les transpondeurs respectifs si l'identification transmise par la station de base est conforme à l'identification envoyée par le transpondeur respectif, et
. en cas de non-conformité, le transpondeur correspondant ne participe plus au processus de sélection dans le créneau temporel.

6. Procédé selon l'une quelconque des revendications précédentes, **caractérisé en ce que** pour la transmission de l'identification d'un transpondeur à la station de base, on utilise une codification du type 3phase1.

7. Procédé selon l'une quelconque des revendications précédentes, **caractérisé en ce que** le nombre aléatoire du premier plan de sélection et/ou un nombre aléatoire ou une séquence de bits de nombre aléatoire du deuxième plan de sélection est généré à l'aide d'un registre à décalage (SR) contreréactionné et cadencé linéairement, dont l'impulsion d'horloge est désactivée durant des phases présentant par rapport à une prise de puissance moyenne une prise de puissance plus élevée du transpondeur.

8. Procédé selon la revendication 7, **caractérisé en ce que** l'impulsion d'horloge du registre à décalage (SR) est désactivée durant une transmission de données entre la station de base (BS) et le transpondeur (TR1, TR2, TR3).

9. Procédé selon la revendication 7 ou 8, **caractérisé en ce que** l'impulsion d'horloge du registre à décalage (SR) est désactivée au moyen d'une porte logique activable, insérée entre une unité d'impulsion d'horloge (TG) et le registre à décalage.

10. Procédé selon l'une quelconque des revendications précédentes, **caractérisé en ce que** le nombre aléatoire du premier plan de sélection et un nombre aléatoire ou une séquence de bits de nombre aléatoire du deuxième plan de sélection est généré à l'aide d'un registre à décalage (SR) contreréactionné et cadencé linéairement.

11. Procédé selon la revendication 10, **caractérisé en ce qu'**une première partie d'un nombre de bits du registre à décalage est affectée au nombre aléatoire du premier plan de sélection et la partie restante de bits du registre à décalage au deuxième nombre aléatoire ou à la deuxième séquence de bits de nombre aléatoire.

12. Procédé selon la revendication 10, **caractérisé en ce que** le nombre aléatoire du premier plan de sélection est généré et mis en mémoire à l'aide du registre à décalage et **en ce qu'**ensuite le nombre aléatoire ou la séquence de bits de nombre aléatoire du deuxième plan de sélection est généré à l'aide du registre à décalage et mis en mémoire séparément par rapport au nombre aléatoire du premier plan de sélection.

13. Procédé selon la revendication 12, **caractérisé en ce que** le registre à décalage est commandé à cadence réduite après la génération du nombre aléatoire du premier plan de sélection.

14. Procédé selon l'une quelconque des revendications 10 à 13, **caractérisé en ce que** l'on génère un nombre aléatoire supplémentaire par combinaison logique du nombre aléatoire ou de la séquence de bits de nombre aléatoire du deuxième plan de sélection et de données spécifiques au transpondeur, lorsque l'ensemble de valeurs du nombre aléatoire ou de la séquence de bits de nombre aléatoire du deuxième plan de sélection est insuffisant pour le deuxième plan de sélection.
